# EUROPÄISCHE PATENTANMELDUNG

(11) **EP 1 432 200 A1**
(43) Veröffentlichungstag der Anmeldung: **23.06.2004**
(21) Anmeldenummer: 03023396.9
(22) Anmeldetag: 17.10.2003
(51) Int. Cl.: H04L 29/06, G06F 17/60, B61L 27/00, H04L 29/08, H04L 12/56

(54) **Bandbreitenverwaltung für Kommunikationsteilsysteme in einem Leitstand**

(30) Priorität: 19.12.2002 DE 10260126
(71) Anmelder: DB Systems GmbH, 60326 Frankfurt (DE)
(72) Erfinder: Schuster, Harald, 64331 Weiterstadt (DE); Spörl, Peter, 90768 Fürth (DE); Meurer, Wilhelm, 60326 Frankfurt am Main (DE)
(74) Vertreter: Zinken-Sommer, Rainer

(57) **Zusammenfassung**

Die Erfindung betrifft eine Einrichtung zur Integration von IP(Internet-Protokoll)-basierten Kommunikationsteilsystemen in einer zentralen Instanz von Verkehrsstationen.
Neben einer geringen, durch wenig prioritäre Kommunikationsbeziehungen gebildeten Grundlast sollen insbesondere spontane und ereignisorientierte Kommunikationsbedürfnisse mit verlässlicher Prozesssicherheit eine qualitativ und quantitativ ausreichende Ressourcenzuteilung erhalten. Gleichzeitig müssen die Kommunikationskosten für das Sammeln und Verteilen von Informationen von und zu dezentralen Verkehrstationen signifikant reduziert werden, so dass auch schwächer frequentierte dezentrale Standorte angeschlossen werden können. Dies wird dadurch erreicht, dass die Kornmunikationsteilsysteme (2.a, 2.b, 2.c) der Verkehrsstation mittels logischer und / oder physischer Endpunkte (5.a, 5.b, 5.c) in ein übergeordnetes Workflow- und Managementsystem (4) der zentralen Instanz integriert sind, die Kommunikationsendpunkte (5.a, 5.b, 5.c) an ein die Bandbreite der gemeinsam genutzten Netzwerkinfrastruktur verwaltendes und zuteilendes Ressourcen-Verwaltungssystem (6) angebunden sind, und das Ressourcen-Verwaltungssystem (6) an ein Managementsystem (7) der zentralen Ebene angebunden ist, von dem es im Falle konkurrierender Zuteilungsanfragen seitens der Kommunikations-Endpunkte eine Konfliktlösungsentscheidung abruft.

## Beschreibung

Die Erfindung betrifft eine Einrichtung zur Integration von IP(Internet-Protokoll)-basierten Kommunikationsteilsystemen in einer zentralen Instanz von Verkehrsstationen.

Aus Kosten- und Effizienzgründen werden die betrieblichen Prozesse bei den flächenmässig weit verzweigten spurgeführten Verkehrsmitteln immer stärker zentralisiert und automatisiert. Dadurch ist abseits der grossen Knotenbahnhöfe immer weniger örtliches Personal vorhanden, welches in der Vergangenheit - neben seinen eigentlichen Tätigkeiten - den reisenden Kunden auch als Ansprechpartner im Falle von Unregelmässigkeiten jeder Art zur Verfügung stehen konnte. In Konsequenz daraus betreibt die Deutsche Bahn AG nunmehr in allen grösseren von ihr bedienten Verkehrsstationen als Leitstand ausgebildete Verkehrszentralen (Betriebszentrale Bahnhof bzw. Marke "3S-Zentrale"), an der alle für die Reisenden hinsichtlich der aktuellen Situation im Bahnverkehr sowie im Betrieb der Verkehrsstation wichtigen Informationen gesammelt, aufbereitet und mittels Kundeninformationssystemen (Monitore, Anzeigetafeln, Lautsprecherdurchsagen, Beantwortung telefonischer Kundenanfragen etc...) den Reisenden wieder zur Verfügung gestellt werden. Diese Verkehrszentralen sind auch Melde- und Koordinierungsstelle für kundenrelevante gebäudetechnische Unregelmässigkeiten (z.B. Funktionsüberwachung der Heizungs- bzw. Klimatisierungsanlagen, Brand- und Einbruchsmeldeanlagen etc...). Analoge Anwendungsgebiete finden sich natürlich auch bei anderen Einrichtungen, die Informationen von dezentral in der Feldebene verteilten Endgeräten, Sensoren etc. aufnehmen, an zentraler Stelle verarbeiten und über dezentral verteilte Anzeige- bzw. Ausgabegeräte wieder bereitstellen. Beispielsweise seien hier sowohl die Informationsanlagen städtischer Verkehrsbetriebe oder an Flughäfen ebenso wie die Überwachungs- und Steuerungszentralen auf dem Sektor der Gebäudeautomation (Hochhäuser, Einkaufszentren, Messegelände...) genannt.
Als Besonderheit auf dem Gebiet des Eisenbahnverkehrs kommt hinzu, dass die Verkehrsstationen mit grossen Entfernungen zueinander in der Fläche verteilt sind und aus Wirtschaftlichkeitsgründen nicht mittels breitbandigen Kommunikationswegen oder gar proprietären Übertragungswegen (In-house- oder Campus-Netze) an die jeweils überwachende und koordinierende Bahnhofszentrale im nächstgelegenen grösseren Knotenbahnhof angeschlossen werden können.

Nahezu parallel zum Konzentrations- und Rationalisierungsgeschehen im Bahnbetrieb hat sich das Internet zu einem allgegenwärtigen Bestandteil nahezu aller industrieller und kommerzieller Prozesse entwickelt. Es besteht demzufolge ein grosses Bedürfnis, die Leistungsfähigkeit diese Kommunikationsmediums zu steigern und die damit einhergehenden Kostenvorteile auch für diejenigen Kommunikationslösungen nutzbar zu machen, die bisher anderen Übertragungsmedien vorbehalten waren.
In der Vergangenheit war das Internet in erster Linie ein Medium zur Übertragung von textbasierten Daten, z.B. Textdateien. Zur weitgehend effizienten Übertragung möglichst grosser Datenmengen wurden deshalb in erster Linie Stossbetriebsübertragungsarten ("burst mode") entwickelt und eingesetzt. Insbesondere bei der Übertragung von Sprach- oder Video-Daten, wie sie bei zentralisierten Anlagenüberwachungs- bzw. Kundeninformationssystemen üblicherweise anfallen, erreichen derartige Übertragungsarten jedoch sehr schnell ihre Grenzen. Sowohl Sprach- als auch Video-Daten weisen sehr unterschiedliche Charakteristika auf und stellen demgemäss unterschiedliche Anforderungen an ihre jeweiligen Übertragungswege. Die Sprachübertragung über das Internet ("Voice over IP" bzw. VOIP) ist sehr sensibel bezüglich der bei paket- bzw. internetorientierten Übertragungsverfahren auftretenden Wartezeit- und Datenverlustproblematiken. Die Videodatenübertragung hingegen stellt sich diesbezüglich robuster dar, benötigt jedoch wegen der grossen anfallenden Datenmengen deutlich grössere Übertragungsbandbreiten.
Für den wirtschaftlichen Betrieb geographisch weit verzweigter Netze mit vielen dezentralen Endgeräte-Standorten und einem hohen Anteil zu übertragender Audio- und / oder Video-Datenströmen ist es von entscheidender Bedeutung, auch bei geringsten Übertragungskapazitäten einen definierten Qualitätsstandard gewährleisten zu können.

Üblicherweise werden Leitstände, Überwachungsanlage oder ähnliche Vorrichtungen mit räumlich eng definierten Aktionsbereichen realisiert. Entsprechend sind die hierbei zum Einsatz kommenden Übertragungsmedien auf vergleichsweise geringe Entfernungen hin ausgelegt. DE 44 02 779 offenbart beispielsweise eine Fernüberwachungsvorrichtung für Tankstellen, deren physikalische Ankopplung über Feldbussysteme (z.B. LON, "Local Operating Network") erfolgt.
Bisherige Ansätze zur Lösung der Ressourcenaufteilung zwischen konkurrierenden Datenströmen auf IP-Netzwerken hingegen konzentrieren sich im wesentlichen auf automatisierte, selbständig ablaufende Verfahren, die einen möglichst hohen Datendurchsatz und eine möglichst hohe Ausnutzung der vorhandenen Leitungswege erreichen sollen. So offenbaren beispielsweise DE 101 61 135 und DE 101 61 136 die Verwendung dynamischer Freigaberaten, die sich an adaptiven Schwellwerten orientieren. Damit sollen ungünstige Auslastungsgrade der Übertragungswege, die durch zu statisch orientierte Ressourcenzuweisungen an konkurrierende Datenströme verursacht sind, vermieden werden. Ein derartiges Verfahren ist jedoch auf Massenverkehre mit entsprechend hohen Übertragungsmengen hin optimiert und verliert bei Kommunikationsstrukturen, die im Mengenaufkommen eher eingeschränkt sowie in erster Linie ereignis- bzw. einzelfallbezogen orientiertiert sind, seine Effizienz.
Desweiteren ist aus DE 198 49 784 ein Verfahren bekannt, bei dem zur Verbesserung der Zuteilung übertragungstechnischer Ressourcen während des Verbindungsaufbaus einer paket- oder internetorientierten Verbindung ein zusätzlicher bidirektionaler Zugriffskanal mit geringer Übertragungsrate aufgebaut wird, über den eine Anforderungsinformation an eine zentrale Ressourceninstanz gerichtet wird, bzw. eine Zuteilinformation an die anfordernde dezentrale Einrichtung übermittelt wird. Aber auch dieses Verfahren hat sich ausdrücklich zum Ziel gesetzt, eine möglichst gleichberechtigte Zuteilung der Netzressourcen an alle Kommunikationsteilnehmer zu gewährleisten. Die Zielsetzung einer gleichberechtigten Ressourcenzuteilung ist jedoch mit Echtzeitanforderungen nicht kompatibel. Somit sind die bislang bekannten Konfigurationen zur Integration von IP-basierten Sprach- / Videodaten auf operativen Leitständen unter Echtzeit-Anforderungen nicht geeignet.

Der Erfindung liegt die Aufgabe zugrunde, eine Einrichtung zur Integration von IP(Internet-Protokoll)-basierten Kommunikationsteilsystemen in einer zentralen Instanz von Verkehrsstationen zu entwickeln, die - neben einer geringen Grundlast durch wenig prioritäre Kommunikationsbeziehungen - mit verlässlicher Prozesssicherheit spontane und ereignisorientierte Kommunikationsbeziehungen mit qualitativ und quantitativ ausreichender Ressourcenzuteilung aufbauen kann. Gleichzeitig dürfen für das Sammeln und Verteilen von Informationen von und zu den dezentralen Verkehrstationen lediglich Kommunikationswege mit den geringst möglichen, am Markt bestellbaren Datenübertragungsraten in Anspruch genommen werden, so dass auch eine Anbindung schwächer frequentierter dezentraler Standorte wirtschaftlich möglich ist.

Diese Aufgabe wird in Verbindung mit dem Oberbegriff des Patentanspruches 1 erfindungsgemäß dadurch gelöst, dass die Kommunikationsteilsysteme mittels logischer und / oder physischer Endpunkte in ein übergeordnetes Workflow- und Managementsystem der zentralen Instanz integriert sind, die Kommunikationsendpunkte an ein die Bandbreite der gemeinsam genutzten Netzwerkinfrastruktur verwaltendes und zuteilendes Ressourcen-Verwaltungssystem angebunden sind, und das Ressourcen-Verwaltungssystem an ein Managementsystem der zentralen Ebene angebunden ist, von dem es im Falle konkurrierender Zuteilungsanfragen seitens der Kommunikations-Endpunkte eine Konfliktlösungsentscheidung abruft.
Durch die Einführung einer besonders einfach strukturierten Eskalationsebene für den Fall von Ressourcenkonflikten ist es in vorteilhafter Weise möglich, trotz minimalster Leitungskapazitäten eine schnelle, situationsgerechte und verlässliche Ressourcenzuteilung für ereignisorientierte Kommunikationsbedürfnisse mit Echtzeitanforderung zu gewährleisten und damit dem Mitarbeiter im Leitstand eine prozesssichere Grundlage für die notwendigen Entscheidungen und Bedienhandlungen zu geben.
Weitere vorteilhafte Ausgestaltungen der erfindungsgemässen Vorrichtung sind den Unteransprüchen zu entnehmen.

Der Erfindungsgedanke wird in nachfolgendem Ausführungsbeispiel visualisiert. Es zeigt jeweils in Prinzipdarstellung:

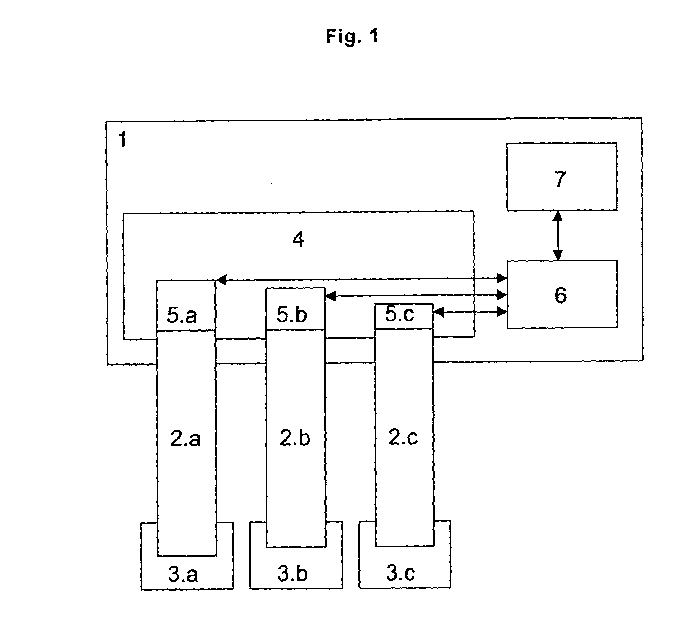

- **Figur 1**: Anordnungsschema der Verkehrszentrale eines Bahnhofes

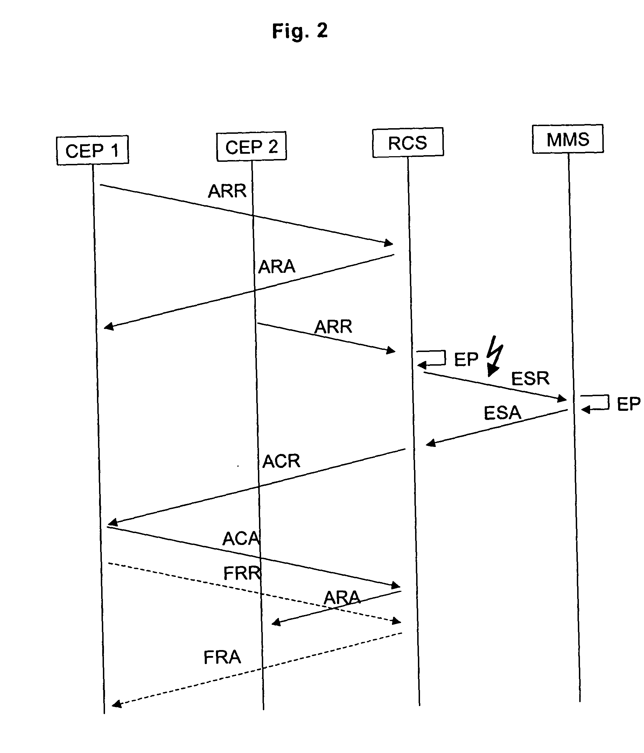

- **Figur 2**: Sequenzdiagramm für Eskalation an Managementsystem (MMS) bei nicht-zuteilbarer Übertragungsressource

In der Verkehrszentrale eines Bahnhofes sind verschiedene Kommunikationsteilsysteme (a, b, c) auf einen zentralen operativen Leitstand (1) vereinigt, der auch die Schnittstelle dieser Teilanwendungssysteme zur Kommunikation mit ihren dezentralen Ein- bzw. Ausgabegeräten über eine gemeinsam genutzte Kommunikationsinfrastruktur ansteuert. Bei diesen Kommunikationsteilsystemen (a, b, c) handelt es sich im einzelnen um die Teilanwendungen:
- Service-Sicherheit-Sauberkeit (3-S)
   Diese Anwendung koordiniert alle Aktivitäten von Bahnhofsmitarbeitern, die im Zusammenhang mit der Aufrechterhaltung bzw. Wiederherstellung eines ordnungsgemässen und kundenfreundlichen Betriebes der Verkehrsstationen stehen (z.B. Reinigungsdienste, Wach- und Streifendienste, Servicemitarbeiter für Auskunft auf dem Bahnsteig, Gepäckträgerdienste etc.). Mittels ferngesteuerter Videoanlagen können räumliche Bereiche optisch fernüberwacht werden; mittels dezentraler Sprechstellen (Notruf-Informationssäulen, NIS) können Reisende Informationsanrufe und Notrufe an den Leitstand übermitteln.
- Reisendeninformationssystem (RIS)
   Diese Anwendung informiert die Reisenden über die Ist-Situation des Bahnbetriebes, insbesondere über Abweichungen vom Sollzustand (Verspätungen, geänderte Zugläufe, geänderte Wagenreihungen etc.). Als Ausgabegeräte dienen optische Anzeigen (Monitore, Anzeigetafeln) sowie akustische Durchsagen.
- Technisches Gebäudemanagement (TGM)
   Diese Anwendung integriert die Steuer- und Überwachungseinrichtungen der technischen Gebäudeausrüstung der Verkehrsstation. In der Bahnhofszentrale werden insbesondere die für den Kundenverkehr relevanten Meldungen aus der Feldebene entgegengenommen (z.B. Ausfall von Fahrstühlen bzw. Rolltreppen, Ausfall Klimatisierung bzw. Heizung etc.). Im wesentlichen werden Steuersignale von einer dezentralen Sensor-Ebene entgegengenommen.

Da es sich insbesondere bei RIS und TGM um bereits vorhandene und spezifizierte Teilanwendungssysteme handelt, sollen die Arbeitsabläufe der Verkehrszentrale in diese nicht direkt eingreifen. Die Verkehrszentrale verfügt deshalb über ein eigenständiges Workflow-Anwendungssystem (4), das als Software-Komponente eine freie Definition der Prozesse für die Abwicklung der Arbeitsaufgaben in der Verkehrszentrale erlaubt. Die einzelnen Teilanwendungssysteme verfügen somit jeweils über ihre eigenen Endgeräte sowie Datenverarbeitungsserver und tauschen mit der zentralen Instanz der Verkehrszentrale lediglich gemäss den im Workflow-Anwendungssystem (4) getätigten Festlegungen Daten aus (Kommunikationsströme, 2).
Die Verkehrszentrale weist üblicherweise eine sternförmige Topologie auf, bei der die regionalen Verkehrsstationen an den zugehörigen zentralen Knotenbahnhof mittels Datenleitungen angebunden sind. Die Übertragungsressourcen dieser Datenleitungen sind zwar an die betriebliche Bedeutung der angeschlossenen regionalen Verkehrsstation angepasst, jedoch mit einer Kapazität von üblicherweise ca. 1024 kBit/s in ihrer Leistungsfähigkeit sehr begrenzt.
Mit Hilfe eines Audiosystems können Aufnahmen von Gesprächen des Leitstands-Bedieners mit Anrufern (Notruf, Information) erzeugt werden. Ein Information Retrieval System dient zur Archivierung und fallweisen statistischen Aufbereitung der erfassten Vorgänge. Zusätzlich verfügt der Leitstands-Bediener über einen Zugang zum unternehmensinternen Intranet, über den der Zugriff zu weiteren Datenbanken (z.B. Verwaltung von Fundobjekten, Verwaltung ausgesprochener Hausverweise etc.) realisiert wird.
Kernstück der Bahnhofszentrale ist jedoch ein Ressourcen-Verwaltungssystem (6), das die Bandbreite der zur Verfügung stehenden Netzwerkinfrastruktur insbesondere für die Sprach-, Videodatenkommunikation verwaltet. Die Teilanwendungssysteme (a, b, c) verfügen über Kommunikations-Endpunkte (5.a, 5.b, 5.c), die in das Workflow-Anwendungssystem der Verkehrszentrale integriert und an das Resourcen-Verwaltungssystem (6) angebunden sind. Grundsätzlich können die unterschiedlichen Endpunkte gleichzeitig mehrere Kommunikationsverbindungen aufbauen. Dazu müssen sie beim Ressourcen-Verwaltungssystem (6) zunächst die Zuteilung von Netzwerk-Ressourcen anfordern.
Im Basis-Anwendungsfall fordert ein Kommunikations-Endpunkt eines Teilanwendungssystems (5) über die Ressourcen-Verwaltungsinstanz (6) mittels einer Anfrage (AllocateResourceRequest; ARR) eine bestimmte Bandbreite an. Die ARR enthält zur eindeutigen Identifizierung eine Transaktions-ID, da eine Teilanwendung mehrere Anfragen generieren kann. Der Kommunikations-Endpunkt (5) adressiert die Anfrage mit der für den Ressourcentyp (Audio, Video) gewünschten Priorität und den notwendigen Bandbreiteninformationen an das Ressourcen-Verwaltungssystem (6), welches die angeforderten Bandbreiten über Klassen - in Anlehnung zu den im Netzdesign mit Diff-Serv festgelegten Klassen - reserviert. Das Ressourcen-Verwaltungssystem (6) bearbeitet die Anfrage innerhalb einer vorkonfigurierbaren Zeit (z.B. 100 ms) und prüft diese auf Erfüllbarkeit. Sofern die angeforderte Bandbreite verfügbar ist, erfolgt mittels einer Bestätigung (AllocateResourceAcknowledge; ARA) deren Zuteilung. Die Antwort ist bezogen auf die gesandte Transaktions-ID mit einem Fehler-Code sowie der zuweisbaren Bandbreite versehen. Ein positive Bestätigung der Anfrage (ErrorCode=0) erlaubt dem Kommunikations-Endpunkt (5) die Ressource für einen vorab unlimitierten Zeitraum zu nutzen. Nach Beendigung der Kommunikationsbeziehung erfolgt ein Freigabe der genutzten Bandbreite durch eine Mitteilung seitens des Kommunikations-Endpunktes (5) an das Ressourcen-Verwaltungssystem (6) (FreeResourceRequest; FRR). Das Ressourcen-Verwaltungssystem (6) registriert diese Bandbreite nunmehr wieder als frei verfügbar und beantwortet innerhalb einer vorkonfigurierbaren Zeitspanne T (z.B. 100 ms) diese Freigabe (FreeResourceAcknowledge; FRA), wobei auch hier ein Fehler-Code die Ausführung qualifiziert. Eine negative Beantwortung der Anfrage ARR (ErrorCode ≠0) führt zum Abbruch des Ablaufs und muss vom Kommunikations-Endpunkt (5) bearbeitet werden. Die synchrone Reihenfolge der Aufrufe wird gewährleistet.
Während der Nutzung einer Ressource durch einen Kommunikations-Endpunkt (5) besteht für das Ressourcen-Verwaltungssystem (6) die Möglichkeit, vom Kommunikations-Endpunkt (5) die Freigabe der gesamten von einer Anwendung genutzte Bandbreite bzw. die teilweise Freigabe der benutzten Bandbreite einer Anwendung zu erzwingen. Hierfür signalisiert das Ressourcen-Verwaltungssystem (6) an den Kommunikations-Endpunkt (5) für welche Transaktion eine gesamte oder partielle Ressourcenrückgabe zu erfolgen hat (AllocateChangeRequest; ACR). Der aufgeforderte Kommunikations-Endpunkt (5) bestätigt die Rückgabe unter Angabe von Fehlerkennung und Qualitätsangabe (AllocateChangeAcknowledge; ACA). In beiden Fällen werden sowohl die Größenordnung der freizugebenden Bandbreite als auch die der freigegebenen Bandbreite mittels Parametrierung der Befehle mitgeteilt.
Sobald das Ressourcen-Verwaltungssystem (6) eine von einem Kommunikations-Endpunkt (5) angeforderte Bandbreite innerhalb einer Verkehrsklasse (TrafficClass, z.B. Video) nicht zusagen kann, eskaliert das Ressourcen-Verwaltungssystem (6) an das übergeordnete Managementsystem (MMS) und fordert eine Entscheidung an (Escalation Request; ESR). Das Ressourcen-Verwaltungssystem (6) informiert dabei über die verursachende Transaktion, Verkehrsklasse und mit welcher Priorität die Anfrage gestellt wurde. Zusätzlich wird dem MMS eine Liste aller aktuellen Transaktionen der betroffenen Verkehrsklasse übertragen. Die einzelnen Einträge der Liste beschreiben zu jeder Transaktion die Namen der Kommunikationspartner (DNS-Namen), sowie die Priorität der zugehörigen Kommunikationsbeziehung. Das MMS entscheidet dann ob eine der Transaktionen aus der Liste zum Abwurf bestimmt werden kann. Unter Abwurf ist in diesem Fall zu verstehen, dass der Abbruch durch einen der beiden Kommunikationspartner erfolgen muss; es erfolgt kein Durchgriff seitens des MMS auf die Kommunikationsbeziehung. Das MMS teilt dem Ressourcen-Verwaltungssystem (6) zusammen mit der Angabe der die Anfrage initiierenden Transaktions-ID den gegebenenfalls abzuwerfenden Kommunikationspartner mit (Escalation Acknowledge; ESA).

### Bezugszeichenliste:

- 1: zentrale Instanz der Verkehrszentrale
- 2: Datenstrom ein Kommunikationsteilsystems
- 3: dezentrale Endgeräte eines Kommunikationsteilsystems
- 4: Workflowsystem der zentralen Instanz
- 5: Endpunkte der Kommunikationsteilsysteme
- 6: Ressourcenverwaltungssystem (Resource Control System)
- 7: Managementsystem der zentralen Instanz
- a: Kommunikationsteilsystem Reisendeninformation
- b: Kommunikationsteilsystem Service, Sicherheit, Sauberkeit
- c: Kommunikationsteilsystem Gebäudemanagement
- ARR: Anfrage Ressourcenzuteilung (Allocate Resource Request)
- ARA: Bestätigung Ressourcenzuteilung (Allocate Resouce Acknowledge)
- FRR: Rückgabe Ressourcenzuteilung (Free Resource Request)
- FRA: Bestätigung Ressourcenrückgabe (Free Resource Acknowledge)
- ACR: Änderungsantrag für zugewiesene Ressource (Allocate Change Request)
- ACA: Bestätigung geänderte Ressourcenzuweisung (Allocate Change Acknowledge)
- ESR: Anfrage Eskalationsebene (Escalation Request)
- ESA: Rückmeldung Eskalationsebene (Escalation Acknowledge)
- EP: Prüfungsvorgang (Evaluation Process)

## Patentansprüche

1. Einrichtung zur Integration von IP(Internet-Protokoll)-basierten Kommunikationsteilsystemen in einer zentralen Instanz von Verkehrsstationen
**dadurch gekennzeichnet, dass** die Kommunikationsteilsysteme (2.a, 2.b, 2.c) mittels logischer und / oder physischer Endpunkte (5.a, 5.b, 5.c) in ein übergeordnetes Workflow- und Managementsystem (4) der zentralen Instanz integriert sind,
die Kommunikationsendpunkte (5.a, 5.b, 5.c) an ein die Bandbreite der gemeinsam genutzten Netzwerkinfrastruktur verwaltendes und zuteilendes Ressourcen-Verwaltungssystem (6) angebunden sind,
und das Ressourcen-Verwaltungssystem (6) an ein Managementsystem (7) der zentralen Ebene angebunden ist, von dem es im Falle konkurrierender Zuteilungsanfragen seitens der Kommunikations-Endpunkte eine Konfliktlösungsentscheidung abruft.

2. Einrichtung zur Integration von Kommunikationsteilsystemen in einer zentralen Instanz von Verkehrsstationen nach Anspruch 1, **dadurch gekennzeichnet, dass** die Kommunikationsteilsysteme (2.a, 2.b, 2.c) zumindest ein Informationssystem zur Anzeige von Betriebszuständen und / oder Abweichungen von Soll-Zuständen umfassen.

3. Einrichtung zur Integration von Kommunikationsteilsystemen in einer zentralen Instanz von Verkehrsstationen nach mindestens einem der Ansprüche 1 bis 2, **dadurch gekennzeichnet, dass** die Kommunikationsteilsysteme (2.a, 2.b, 2.c) zumindest ein System zur Fernüberwachung und / oder Ferndiagnose von Betriebszuständen umfassen.

4. Einrichtung zur Integration von Kommunikationsteilsystemen in einer zentralen Instanz von Verkehrsstationen nach mindestens einem der Ansprüche 1 bis 3, **dadurch gekennzeichnet, dass** die Kommunikationsteilsysteme (2.a, 2.b, 2.c) zumindest ein Fernwirksystem zur Ansteuerung von räumlich entfernten Aktoren umfassen.
